# EUROPEAN PATENT APPLICATION

(11) **EP 2 253 920 A2**
(43) Date of publication of application: **24.11.2010**
(21) Application number: 10163028.3
(22) Date of filing: 17.05.2010
(51) Int. Cl.: F28D 20/00, F24J 3/08, F24D 3/18

(54) **Geothermal heat pump system**

(30) Priority: 19.05.2009 US 179497 P; 16.02.2010 US 304988 P
(71) Applicant: Thermapan Industries Inc., Fort Erie ON L2A 5N2 (CA)
(72) Inventor: Taraba, Jeffrey M, Fort Erie Ontario L2A 5M4 (CA); Taraba, Emil M, Fort Erie Québec L2A 5M4 (CA)
(74) Representative: Smee, Anthony James Michael

(57) **Abstract**

A geothermal heat pump system (20) comprises at least one heat exchange unit (24) and a ground loop (26) in fluid communication with the at least one heat exchange unit (24). The ground loop (26) has a feed into (30) which heat exchange fluid is delivered by the at least one heat exchange unit (24) and has a discharge via (32) which circulated heat exchange fluid is returned to the at least one heat exchange unit (24). The ground loop (26) comprises at least one fluid circuit formed of tubing arranged to define a plurality of laterally spaced, vertical coils (34) buried in earth beneath a foundation slab (54) of a building structure (50).

## Description

### Field of the Invention

The present invention relates generally to geothermal heating and in particular, to a geothermal heat pump system, to a building structure incorporating the same and to a method of installing a geothermal heat pump system ground loop.

### Background of the Invention

Geothermal heat pump systems utilize the natural difference between the temperature of the earth below the ground surface and the temperature of the air above the ground surface to create a thermal driving force for the operation of a heat exchange unit, which in turn is operated to control the internal climate of a building structure or the like. Geothermal heat pump systems are generally considered to be an environmentally-friendly alternative or supplement to conventional heating and cooling systems, such as furnaces and air conditioners, due to the fact that geothermal heat pump systems rely partially on a natural energy source.

Conventional geothermal heat pump systems comprise a heat exchange unit that is in fluid communication with a loop of tubing buried in the ground, commonly referred to as a ground loop. A heat-exchange fluid, such as a water/ethylene glycol mixture, is circulated through the ground loop, during which heat is exchanged between the earth proximate the ground loop and the heat exchange fluid. When the heat exchange fluid returns to the heat exchange unit after having circulated through the ground loop, the temperature difference between the heat exchange fluid being fed to the ground loop and the heat exchange fluid returning from the ground loop is used by the heat exchange unit to generate either heated or cooled air. This heated or cooled air is then pumped into the interior of a building structure to control its internal climate.

A variety of ground loop configurations can be used with geothermal heat pump systems. For "closed-loop" configurations, in which the ground loop provides a closed circuit for the circulating heat exchange fluid, two known configurations are commonly employed, namely horizontal closed-loop and vertical closed-loop configurations. In the horizontal closed-loop configuration, the ground loop is typically laid horizontally in a shallow trench dug into the ground adjacent the building structure to be serviced by the geothermal heat pump system. In the vertical closed-loop configuration, the ground loop is typically placed in a 100 foot to 400 foot deep well formed in ground adjacent the building structure to be serviced by the geothermal heat pump system.

Various geothermal heat pump systems have been considered. For example, U.S. Patent No. 5,533,356 to DeMasters discloses an in-ground conduit system for a ground source heat pump. The in-ground conduit system comprises a conduit loop buried in the earth to one side of a building. At least one wing member is mounted on the conduit loop to contact the ground and resist upward movement of the conduit loop.

U.S. Patent No. 5,339,890 to Rawlings discloses a ground source heat pump system comprising a subterranean piping installation constructed of a plurality of modular heat exchange units. The subterranean piping installation is buried to one side of a building structure.

As will be appreciated, it can be costly to install a geothermal heat pump system for servicing a building structure once the building structure has been constructed, owing to the effort required to excavate the yard surrounding building structure to install the ground loop. In cases where sufficient land or yard space is not available to accommodate the ground loop, other non-conventional provisions need to be made to install the ground loop, which can require complex and costly excavation adding to the cost of the geothermal heat pump system. As a result, there exists a need for a geothermal heat pump system that has a low installation cost and that is compatible with building structures associated with limited yard space.

It is therefore an object of the present invention to provide a novel geothermal heat pump system, a novel building structure incorporating the geothermal heat pump system and a novel method of installing a geothermal heat pump system ground loop.

### Summary of the Invention

Accordingly, in one aspect there is provided a geothermal heat pump system comprising at least one heat exchange unit; and a ground loop in fluid communication with said at least one heat exchange unit, said ground loop having a feed into which heat exchange fluid is delivered by said at least one heat exchange unit and having a discharge via which circulated heat exchange fluid is returned to said at least one heat exchange unit, said ground loop comprising at least one fluid circuit formed of tubing arranged to define a plurality of laterally spaced vertical coils buried in earth beneath a foundation slab of a building structure.

In one embodiment, the vertical coils are connected in series and are arranged in at least one row. The vertical coils may also be generally evenly spaced.

In another embodiment, the ground loop comprises a plurality of fluid circuits with each fluid circuit comprising a plurality of laterally spaced, vertical coils connected in series. The vertical coils of each fluid circuit are arranged in at least one row and are generally evenly spaced.

In yet another embodiment, the ground loop further comprises helical tubing wound about the foundation walls of the building structure.

According to another aspect, there is provided a method of installing a ground loop of a geothermal heat pump system comprising excavating earth to create a foundation excavation; excavating a plurality of laterally spaced, generally vertical boreholes within the foundation excavation; inserting a coil of tubing into each borehole, the coils being connected in series; applying backfill over the coils; and laying a foundation slab over the backfill.

In one embodiment, a portion of the ground loop is wound about foundation walls. The winding may be performed prior to construction of the foundation walls or after construction of the foundation walls.

According to yet another aspect, there is provided a ground loop for a geothermal heat pump system comprising a feed into which heat exchange fluid is delivered by at least one heat exchange unit; a discharge to return circulated heat exchange fluid to said at least one heat exchange unit; and at least one fluid circuit formed of tubing arranged to define a plurality of laterally spaced, vertical coils buried in earth beneath a foundation slab of a building structure.

### Brief Description of the Drawings

Embodiments will now be described more fully with reference to the accompanying drawings in which:

Figure 1 is a cross-sectional view of a building structure serviced by a geothermal heat pump system;

Figure 2 is another cross-sectional view of the building structure of Figure 1, partially cut away, showing the geothermal heat pump system in top plan;

Figure 3 is a cross-sectional view, similar to Figure 2, showing another embodiment of a geothermal heat pump system;

Figure 4 is a cross-sectional view, similar to Figure 2, showing yet another embodiment of a geothermal heat pump system;

Figure 5 is a cross-sectional view of a building structure serviced by yet another embodiment of a geothermal heat pump system;

Figure 6 is another cross-sectional view of the building structure of Figure 5, partially cut away, showing the geothermal heat pump system in top plan;

Figure 7 is a cross-sectional view of a building structure serviced by yet another embodiment of a geothermal heat pump system;

Figure 8 is another cross-sectional view of the building structure of Figure 7, partially cut away, showing the geothermal heat pump system in top plan;

Figure 9 is a cross-sectional view, similar to Figure 8, showing yet another embodiment of a geothermal heat pump system;

Figure 10 is a cross-sectional view, similar to Figure 8, showing yet another embodiment of a geothermal heat pump system;

Figure 11 is a cross-sectional view of a building structure serviced by yet another embodiment of a geothermal heat pump system;

Figure 12 is another cross-sectional view of the building structure of Figure 11, partially cut away, showing the geothermal heat pump system in top plan;

Figure 13 is a cross-sectional view of a building structure serviced by yet another embodiment of a geothermal heat pump system;

Figure 14 is another cross-sectional view of the building structure of Figure 13, partially cut away, showing the geothermal heat pump system in top plan;

Figure 15 is a cross-sectional view of a building structure serviced by still yet another embodiment of a geothermal heat pump system; and

Figure 16 is another cross-sectional view of the building structure of Figure 15, partially cut away, showing the geothermal heat pump system in top plan.

### Detailed Description of the Embodiments

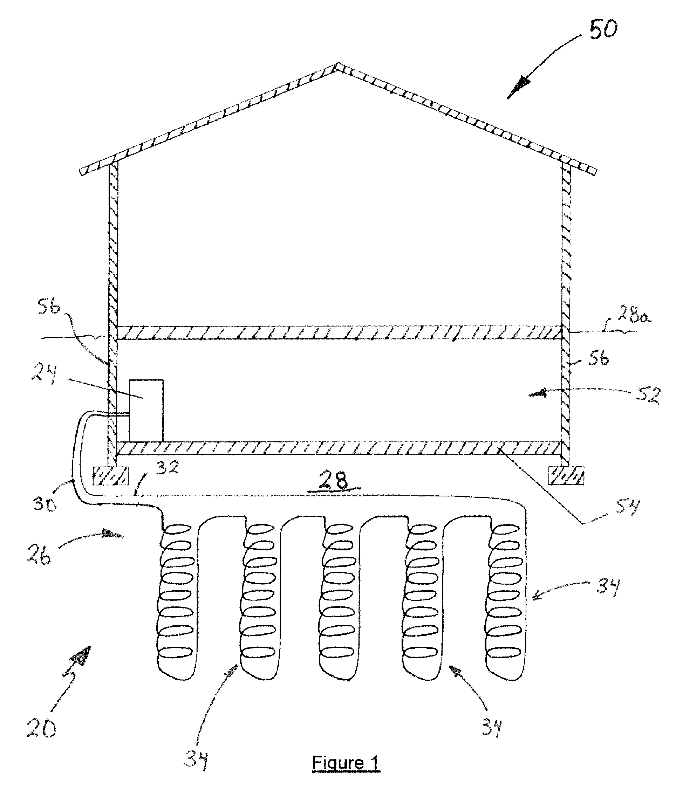

The following description is directed to a geothermal heat pump system that comprises a ground loop inserted into the earth directly beneath the foundation slab of a building structure or the like. The ground loop is inserted into the earth after the foundation excavation has been completed, but before the foundation has been constructed, and more specifically before the foundation slab has been laid. This construction sequence takes advantage of the excavation carried out for the foundation, and therefore obviates the need for significant further excavation for the ground loop, which reduces the cost of installation of the geothermal heat pump system. The ground loop comprises a plurality of laterally spaced, generally vertical coils, the boreholes for which can be easily excavated and arranged during the installation stage. As the characteristics of the vertical coils, such as their number, density of windings, and spacing, are related to the quantity of heat transferred between the earth and the heat exchange fluid circulating within the ground loop, the use of coils in this arrangement provides a simple way to control the quantity of heat transfer, allowing the design requirements of different individual geothermal heat pump systems to be met. Various embodiments of geothermal heat pump systems will now be described with particular reference to Figures 1 to 16.

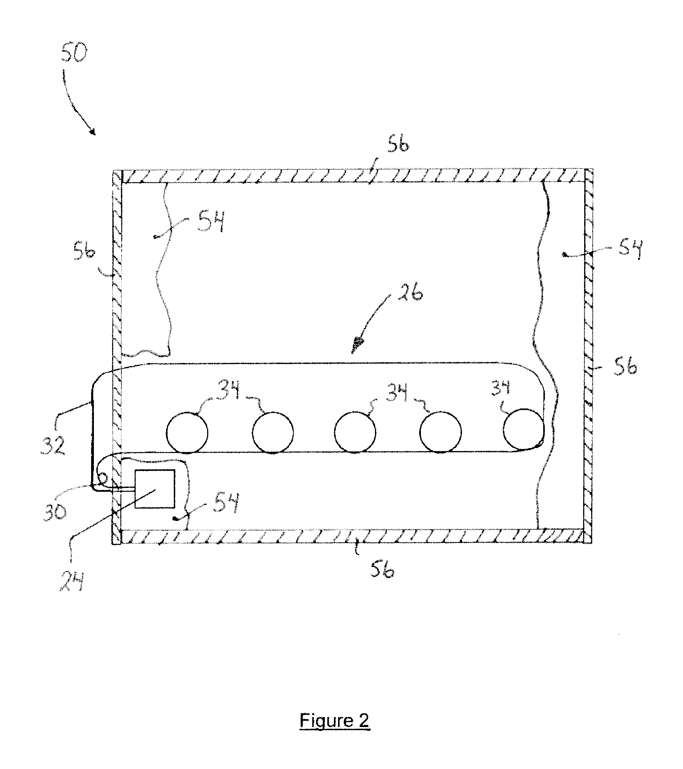

Turning now to Figures 1 and 2, a geothermal heat pump system is shown and is generally indicated by reference numeral 20. In this example, geothermal heat pump system 20 services a building structure 50 in the form of a house. Those of skill in the art will appreciate that the building structure 50 need not be residential and in fact can be virtually any building structure whose internal climate needs to be controlled. Geothermal heat pump system 20 comprises a heat exchange unit 24 and a ground loop 26 in fluid communication with the heat exchange unit 24. The heat exchange unit 24 is located in the basement 52 of the building structure 50 and rests on the foundation slab 54 of the building structure 50. The ground loop 26 is buried in the earth 28 directly beneath the foundation slab 54. Heat exchange fluid circulates through the heat exchange unit 24 and the ground loop 26. The heat exchange fluid can be any suitable heat exchange medium and in this embodiment is a water/ethylene glycol mixture.

In this embodiment, the ground loop 26 is formed of high-density polyethylene tubing that is arranged to form a single fluid circuit so that heat exchange fluid fed into the ground loop 26 by the heat exchange unit 24 follows a serial path through the tubing before returning to the heat exchange unit. To that end, the ground loop 26 comprises a feed conduit 30 receiving the heat exchange fluid discharged by the heat exchange unit 24, a discharge conduit 32 returning the heat exchange fluid that has circulated through the ground loop 26 back to the heat exchange unit 24 and a plurality of generally equally spaced, vertical coils 34, in this embodiment five (5) coils, connected in series and arranged in a row that is intermediate the feed conduit 30 and the discharge conduit 32. Each vertical coil 34 in this embodiment has generally the same diameter and the same number of windings. Making use of vertical coils 34 enables the total length of the ground loop 26 to be increased while reducing the amount of excavation required to install the ground loop 26.

In operation, the heat exchange unit 24 delivers heat exchange fluid to the feed conduit 30 of the ground loop 26. Heat exchange fluid entering the feed conduit 30 flows through the tubing passing through each of the vertical coils 34 in succession before being returned to the heat exchange unit 24 via the discharge conduit 32. During flow of the heat exchange fluid through the ground loop 26, heat is transferred between the earth 28 surrounding the ground loop 26 and the heat exchange fluid. The difference in temperature between the heat exchange fluid being fed into the ground loop 26 by the heat exchange unit 24 and the heat exchange fluid being returned to the heat exchange unit 24 from the ground loop 26 creates a thermal driving force that is used by the heat exchange unit 24. In particular, the heat exchange unit 24 comprises a second internal loop containing a refrigerant (not shown). The thermal driving force is utilized by the heat exchange unit 24 to drive the refrigerant through a vapor-compression refrigeration cycle, which in turn is used to generate heated or cooled air, as is well known to those of skill in the art. This heated or cooled air is then pumped by heat exchange unit 24 into the interior of building structure 50 to control the internal climate within the building structure 50.

During installation of the geothermal heat pump system 20, after the ground for the foundation of the building structure 50 has been excavated, vertical boreholes sized to accommodate the vertical coils 34 are formed in the earth. As each vertical coil 34 has generally the same diameter, the boreholes can be readily formed using a single auger or other suitable excavation tool. Once the boreholes have been formed, each vertical coil 34 is positioned in a respective borehole. The vertical coils 34 are then backfilled thereby covering the vertical coils with earth 28. Once the appropriate amount of backfilling has been achieved, the foundation slab 54 is laid on the earth 28 and the remainder of the foundation constructed. The feed and discharge conduits 30 and 32 respectively, of the ground loop 26 are then fed through one of the foundation walls 56 and backfill is placed around the foundation walls 56. As will be appreciated, this construction sequence takes advantage of the excavation that is required for constructing the foundation of the building structure 50 eliminating the requirement for separate excavation for the ground loop 26. As the ground loop 26 is positioned directly below the foundation slab 54 of the building structure 50, the geothermal heat pump system 20 is compatible for use with building structures associated with limited or no yard space.

As will be appreciated, many factors determine the effectiveness and efficiency of the geothermal heat pump system 20. For example, the quantity of heat transferred between the earth 28 surrounding the ground loop 26 and the heat exchange fluid circulating through ground loop 26, the efficiency of the heat exchange unit 24, and the size and energy efficiency of the building structure 50 all contribute to the effectiveness and efficiency of the geothermal heat pump system 20. With regard to the first factor, the quantity of heat transferred between the earth 28 surrounding the ground loop 26 and the heat exchange fluid flowing through the ground loop 26 is itself determined by a number of different factors, including but not limited to the average seasonal temperature of the earth 28, the average temperature difference between the earth 28 and the air above the ground surface 28a, the soil characteristics and groundwater content of the earth, and the configuration of the ground loop 26. Consequently, and as will be appreciated, the configuration of the ground loop 26, such as the total length of the ground loop 26, the depth of the vertical coils 34, the density of the vertical coil windings, the lateral spacing of the vertical coils 34, and the number of vertical coils 34, impacts the efficiency of the geothermal heat pump system 20. Depending on the environment, for a given geothermal heat pump system installation one or more of these configuration parameters may be varied to suit particular needs.

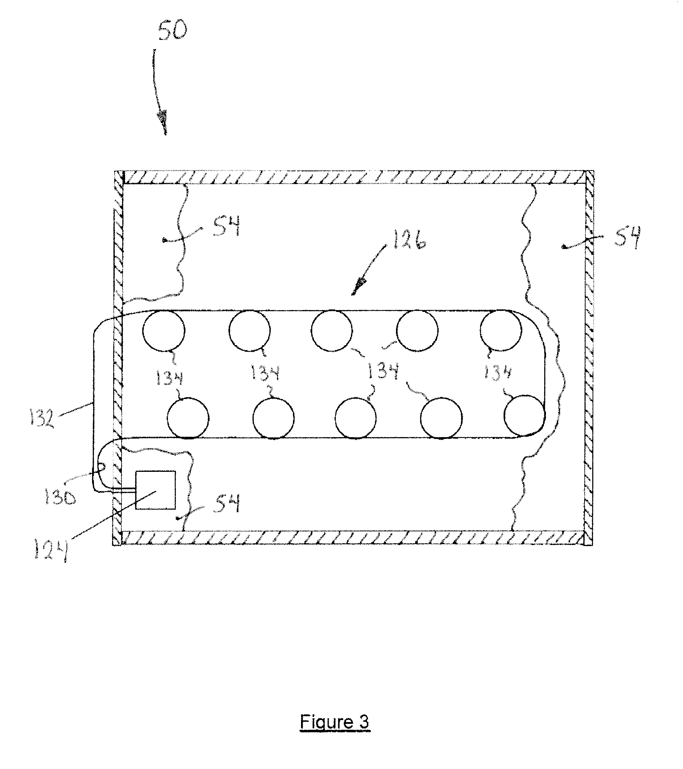

Figure 3 shows an alternative embodiment of a geothermal heat pump system 120 servicing the building structure 50. In this embodiment, similar to the previous embodiment, the ground loop 126 is formed of high-density polyethylene tubing that is arranged to form a single fluid circuit so that heat exchange fluid fed into the ground loop 126 by the heat exchange unit 124 follows a serial path through the tubing before returning to the heat exchange unit. The ground loop 126 comprises a feed conduit 130 receiving the heat exchange fluid discharged by the heat exchange unit 124, a discharge conduit 132 returning the heat exchange fluid that has circulated through the ground loop 126 back to the heat exchange unit 124 and a plurality of generally equally spaced, vertical coils 134 connected in series and arranged in two generally parallel rows. Each row of vertical coils 134 comprises five (5) coils. Similar to the previous embodiment, each vertical coil 134 has generally the same diameter and the same number of windings.

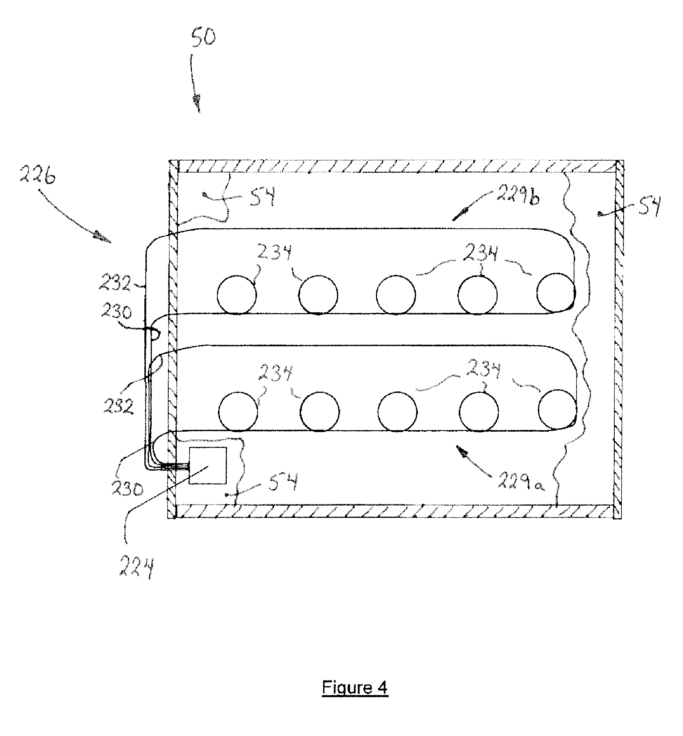

Yet another embodiment of a geothermal heat pump system 220 servicing the building structure 50 is shown in Figure 4. In this embodiment similar to the previous embodiments, the ground loop 226 is formed of high-density polyethylene tubing. Unlike the previous embodiments however, the tubing is arranged to form a pair of parallel fluid circuits 229a and 229b with each fluid circuit being in communication with the heat exchange unit 224. Each fluid circuit comprises a feed conduit 230 receiving heat exchange fluid discharged by the heat exchange unit 224, a discharge conduit 232 returning the heat exchange fluid that has circulated through the tubing of the fluid circuit back to the heat exchange unit 224 and a plurality of generally equally spaced, vertical coils 234, in this embodiment five (5) coils, connected in series and arranged in a row. Each vertical coil 234 in this embodiment has generally the same diameter and the same number of windings. The two rows of vertical coils 234 of the fluid circuits 229a and 229b are generally parallel. The use of two separate parallel fluid circuits provides the ground loop 226 with an increased total length and allows each fluid circuit to be operated individually. Thus, when only a small quantity of heat transfer is required to control the climate of the building structure 50, for example, such as in mild weather, only one of the fluid circuits needs to be used to circulate heat exchange fluid.

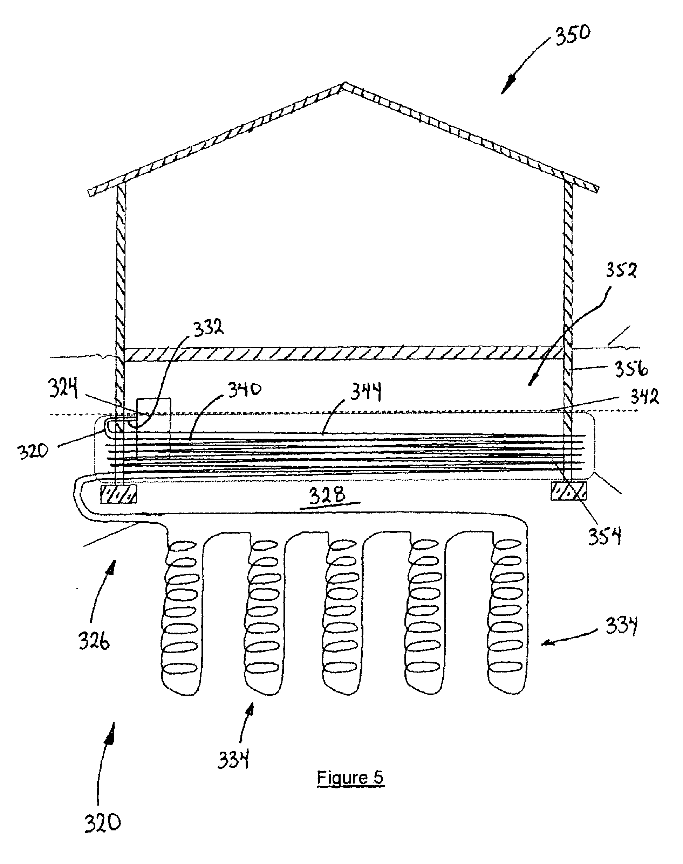

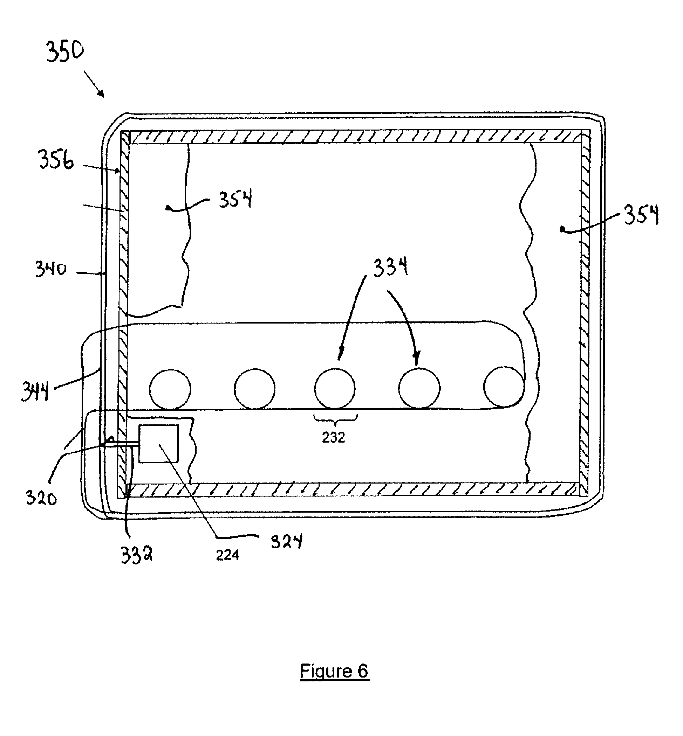

Figures 5 and 6 show still yet another embodiment of a geothermal heat pump system 320 servicing a building structure 350 in the form of a house. Geothermal heat pump system 320 comprises a heat exchange unit 324 and a ground loop 326 in fluid communication with the heat exchange unit 324. The heat exchange unit 324 is located in the basement 352 of the building structure 350 and rests on the foundation slab 354 of the building structure 350. The ground loop 326 receives heat exchange fluid discharged by the heat exchange unit 324 and returns the heat exchange fluid to the heat exchange unit 324 after the heat exchange fluid has circulated through the ground loop 326.

Similar to the previous embodiments, the ground loop 326 is formed of high-density polyethylene tubing. The ground loop 326 is arranged to form a single fluid circuit so that heat exchange fluid fed into the ground loop 326 by the heat exchange unit 324 follows a serial path through the tubing before returning to the heat exchange unit 324. In this embodiment, the ground loop 326 comprises a feed conduit 330 receiving the heat exchange fluid discharged by the heat exchange unit 324, a discharge conduit 332 returning the heat exchange fluid that has circulated through the ground loop 326 back to the heat exchange unit 324, a helical winding 340 coupled to the feed conduit 320 that is buried in the earth 328 below the frost line 342 and is wound about the foundation walls 356 of the building structure 350, a helical winding 344 coupled to the discharge conduit 332 that is buried in the earth 328 below the frost line 342 and is wound about the foundation walls 356 and a plurality of generally equally spaced, vertical coils 334 connected in series and arranged in a row that interconnects the helical windings 340 and 344. Each vertical coil 334 has generally the same diameter and the same number of windings. The helical windings 340 and 344 enable the length of the ground loop 326 to be extended, and enable any heat transferred between earth 328 surrounding the foundation walls 356 and the heat exchange fluid being circulated through ground loop 226 to contribute to the total heat transfer. In one scenario, the length of the ground loop 326 as compared to the previous embodiments could be kept constant, and as a result use of the helical windings 340 and 344 allows the number of vertical coils 334 to be reduced, thus reducing the amount of excavation required to install the vertical coils 334.

The installation of the ground loop 326 can be carried out in one or more stages. For single stage installation, ground loop 326 is installed following the foundation excavation but prior to both the laying of the foundation slab 354 and the construction of the foundation walls 356. In other words, both the vertical coils 334 and the helical windings 340 and 344 are installed in the earth 328 before the foundation slab 354 is laid and before the foundation walls 356 are built. Alternatively, for multiple stage installation, the vertical coils 334 are initially inserted into boreholes formed in the earth 328 and the construction of the foundation proceeds so that the foundation slab 354 is laid and the foundation walls 356 built. Once the foundation walls are built, the helical windings 340 and 344 are installed.

If desired, the helical windings 340 and 344 may form an individual fluid circuit that is in parallel with the vertical coils 334 rather than being connected in series with the vertical coils.

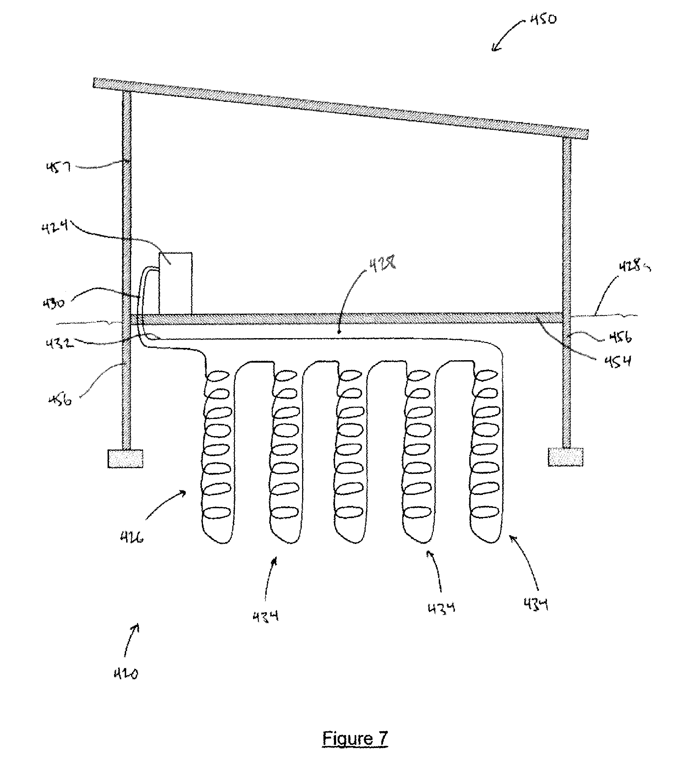

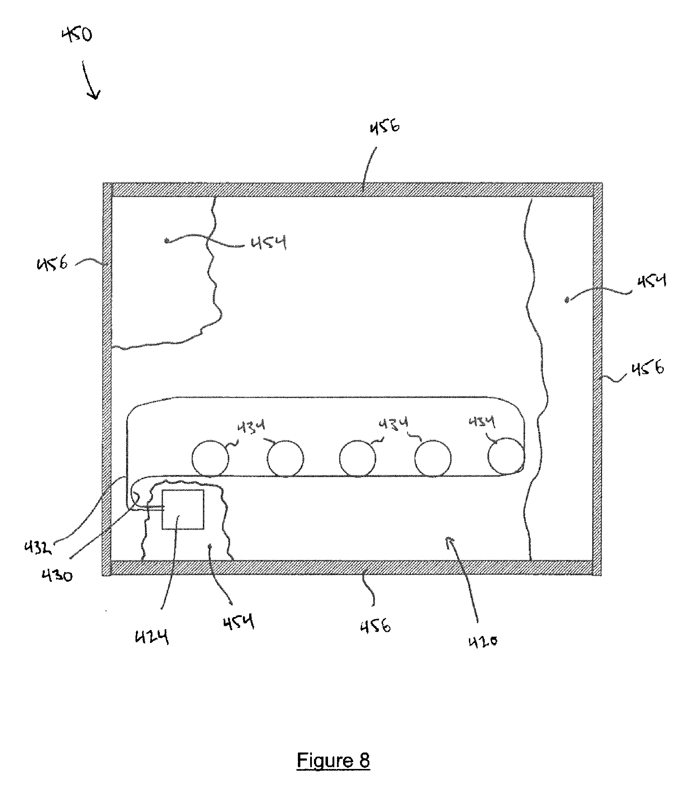

Figures 7 and 8 show yet another embodiment of a geothermal heat pump system, which is generally indicated by reference numeral 420. In this example, geothermal heat pump system 420 services a building structure 450 in the form of a commercial building. Those of skill in the art will appreciate that the building structure 450 need not be commercial and in fact can be virtually any building structure whose internal climate needs to be controlled. Geothermal heat pump system 420 comprises a heat exchange unit 424 and a ground loop 426 in fluid communication with the heat exchange unit 424. The heat exchange unit 424 is located in the building structure 450 and rests on a foundation slab 454, which in this case is a slab on grade. The foundation walls 456 extend downwardly beneath the foundation slab 454, and are supported by footings 458. The ground loop 426 is buried in the earth 428 directly beneath the foundation slab 454. Heat exchange fluid circulates through the heat exchange unit 424 and the ground loop 426. The heat exchange fluid can be any suitable heat exchange medium and in this embodiment is a water/ethylene glycol mixture.

Similar to the previous embodiments, the ground loop 426 is formed of high-density polyethylene tubing that is arranged to form a single fluid circuit so that heat exchange fluid fed into the ground loop 426 by the heat exchange unit 424 follows a serial path through the tubing before returning to the heat exchange unit. To that end, the ground loop 426 comprises a feed conduit 430 receiving the heat exchange fluid discharged by the heat exchange unit 424, a discharge conduit 432 returning the heat exchange fluid that has circulated through the ground loop 426 back to the heat exchange unit 424 and a plurality of generally equally spaced, vertical coils 434, in this embodiment five (5) coils, connected in series and arranged in a row that is intermediate the feed conduit 430 and the discharge conduit 432. Each vertical coil 434 in this embodiment has generally the same diameter and the same number of windings.

During installation of the geothermal heat pump system 420, after the ground for the foundation of the building structure 450 has been excavated and foundation walls 456 have been constructed, vertical boreholes sized to accommodate the vertical coils 434 are formed in the earth. As each vertical coil 434 has generally the same diameter, the bores can be readily formed using a single auger or other suitable excavation tool. The boreholes extend below the bottoms of foundation walls 456 and associated footings. Once the boreholes have been formed, each vertical coil 434 is positioned in a respective borehole and the feed and discharge conduits 430 and 432 are positioned to extend above the foundation slab location. The volume between foundation walls 456 is then backfilled, thereby covering the vertical coils 434 with earth 428. Once the appropriate amount of backfilling has been achieved, the foundation slab 454 is laid on the earth 428 at ground surface level 428a, and the remainder of the building structure 450 is constructed. The feed and discharge conduits 430 and 432 respectively, of the ground loop 426 which extend through the foundation slab 454 are then connected to the heat exchange unit 424. As will be appreciated, this construction sequence takes advantage of the excavation that is required for constructing the foundation of the building structure 450 eliminating the requirement for separate excavation for the ground loop 426. As the ground loop 426 is positioned directly below the foundation slab 454 of the building structure 450, the geothermal heat pump system 420 is compatible for use with building structures associated with limited or no yard space.

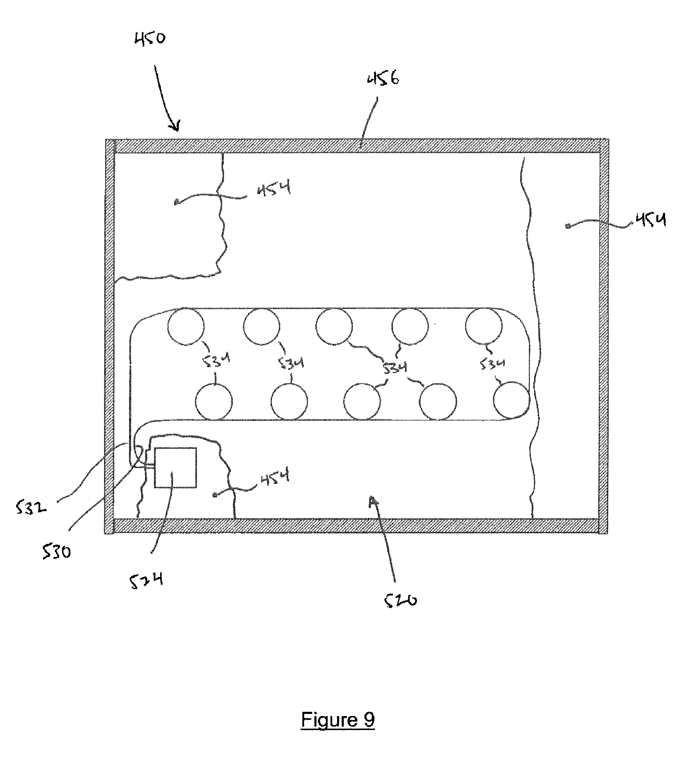

Figure 9 shows an alternative embodiment of a geothermal heat pump system 520 servicing the building structure 450. In this embodiment, similar to the previous embodiment, the ground loop 526 is formed of high-density polyethylene tubing that is arranged to form a single fluid circuit so that heat exchange fluid fed into the ground loop 526 by the heat exchange unit 524 follows a serial path through the tubing before returning to the heat exchange unit. The ground loop 526 comprises a feed conduit 530 receiving the heat exchange fluid discharged by the heat exchange unit 524, a discharge conduit 532 returning the heat exchange fluid that has circulated through the ground loop 526 back to the heat exchange unit 524 and a plurality of generally equally spaced, vertical coils 534 connected in series and arranged in two generally parallel rows. Each row of vertical coils 534 comprises five (5) coils. Similar to the previous embodiment, each vertical coil 534 has generally the same diameter and the same number of windings.

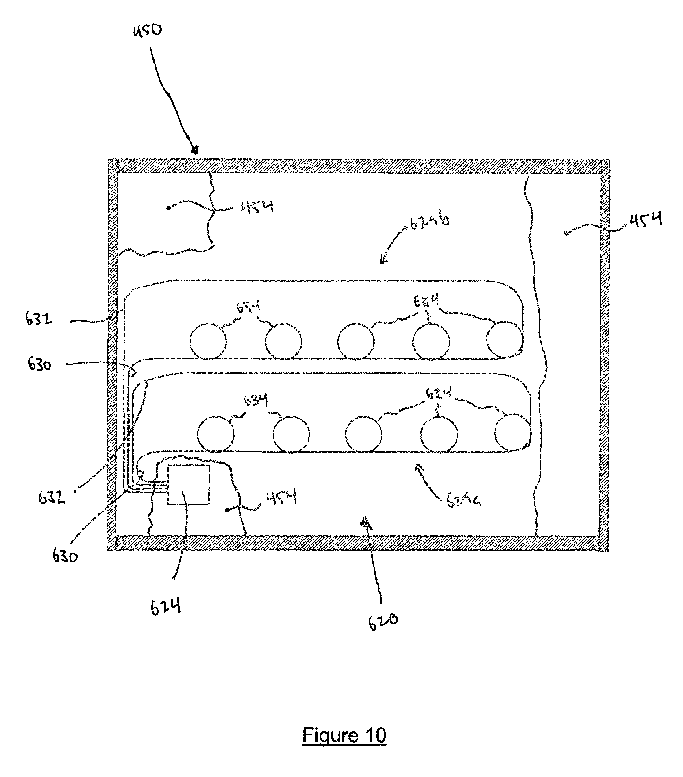

Yet another embodiment of a geothermal heat pump system 620 servicing the building structure 450 is shown in Figure 10. In this embodiment similar to the previous embodiments, the ground loop 626 is formed of high-density polyethylene tubing. The tubing is arranged to form a pair of parallel fluid circuits 629a and 629b with each fluid circuit being in communication with the heat exchange unit 624. Each fluid circuit comprises a feed conduit 630 receiving heat exchange fluid discharged by the heat exchange unit 624, a discharge conduit 632 returning the heat exchange fluid that has circulated through the tubing of the fluid circuit back to the heat exchange unit 624 and a plurality of generally equally spaced, vertical coils 634, in this embodiment five (5) coils, connected in series and arranged in a row. Each vertical coil 634 in this embodiment has generally the same diameter and the same number of windings. The two rows of vertical coils 634 of the fluid circuits 629a and 629b are generally parallel. The use of two separate parallel fluid circuits provides the ground loop 626 with an increased total length and allows each fluid circuit to be operated individually. Thus, when only a small quantity of heat transfer is required to control the climate of the building structure 450, for example, such as in mild weather, only one of the fluid circuits needs to be used to circulate heat exchange fluid.

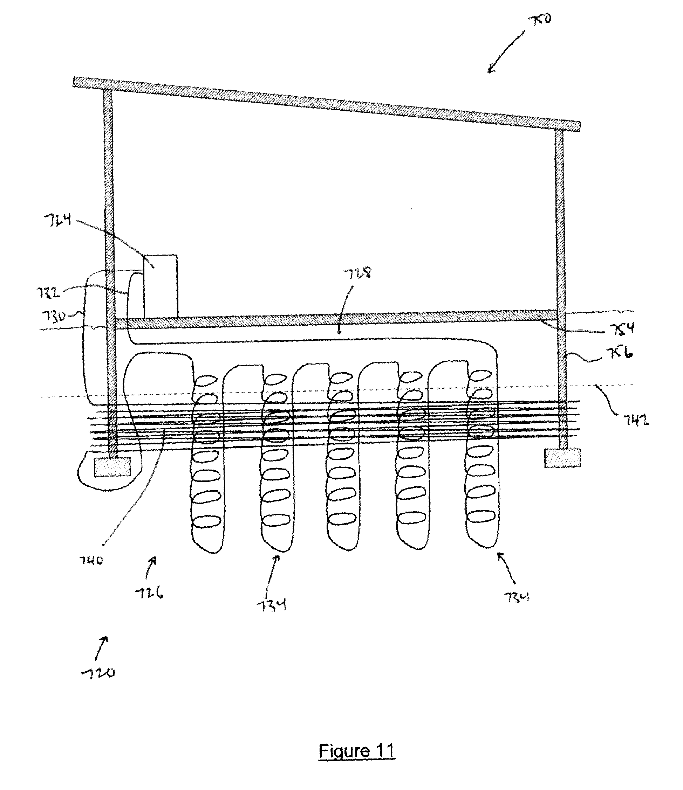

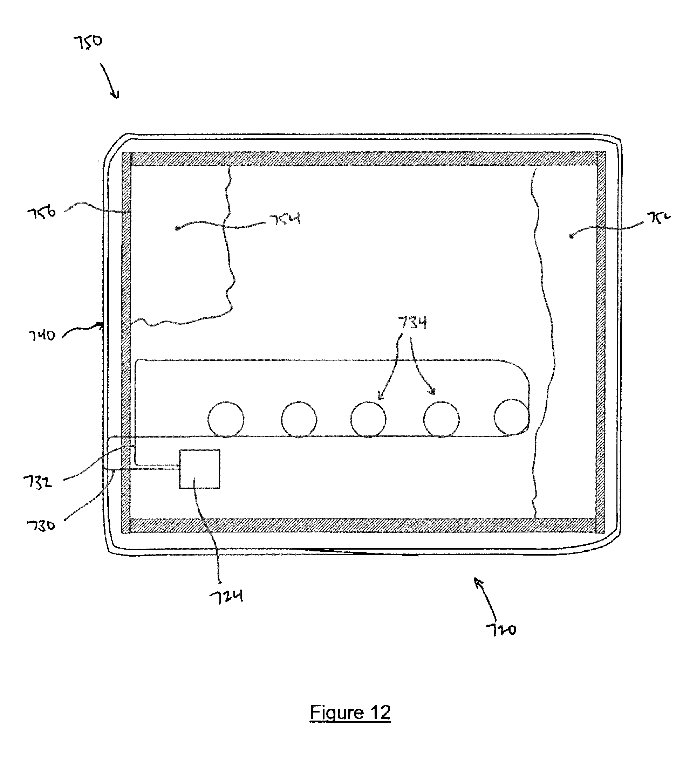

Figures 11 and 12 show yet another embodiment of a geothermal heat pump system 720 servicing a building structure 750. Geothermal heat pump system 720 comprises a heat exchange unit 724 and a ground loop 726 in fluid communication with the heat exchange unit 724. The heat exchange unit 724 is located in the building structure 750 and rests on a foundation slab 754 of the building structure 750, which is a slab on grade. The ground loop 726 receives heat exchange fluid discharged by the heat exchange unit 724 and returns the heat exchange fluid to the heat exchange unit 724 after the heat exchange fluid has circulated through the ground loop 726.

Similar to the previous embodiments, the ground loop 726 is formed of high-density polyethylene tubing. The ground loop 726 is arranged to form a single fluid circuit so that heat exchange fluid fed into the ground loop 726 by the heat exchange unit 724 follows a serial path through the tubing before returning to the heat exchange unit 724. In this embodiment, the ground loop 726 comprises a feed conduit 730 receiving the heat exchange fluid discharged by the heat exchange unit 724, a discharge conduit 732 returning the heat exchange fluid that has circulated through the ground loop 726 back to the heat exchange unit 724, a helical winding 740 coupled to the feed conduit 730 that is buried in the earth 728 below the frost line 742 and is wound about the exterior of the foundation walls 756 of the building structure 750, and a plurality of generally equally spaced, vertical coils 734 connected in series and arranged in a row. Each vertical coil 734 has generally the same diameter and the same number of windings. The helical winding 740 enables the length of the ground loop 726 to be extended, and enables any heat transferred between earth 728 surrounding the foundation walls 756 and the heat exchange fluid being circulated through ground loop 726 to contribute to the total heat transfer. In one scenario, the length of the ground loop 726 as compared to the embodiments of Figures 7 to 10 could be kept constant, and as a result use of the helical winding 740 allows the number of vertical coils 734 to be reduced, thus reducing the amount of excavation required to install the vertical coils 734.

The installation of the ground loop 726 can be carried out in one or more stages. For single stage installation, ground loop 726 is installed following the foundation excavation but prior to the construction of the foundation walls 756. In other words, both the vertical coils 734 and the helical winding 740 are installed in the earth 728 before the foundation walls 756 are built. Alternatively, for multiple stage installation, the vertical coils 734 are initially inserted into boreholes formed in the earth 728 and the construction of the foundation proceeds so that the foundation walls are constructed, the volume between foundation walls is backfilled, and the foundation slab 754 is laid. Once the foundation has been constructed, the helical winding 740 is installed. Those of skill in the art will appreciate that still other alternative installation sequences are possible.

If desired, the helical winding 740 may form an individual fluid circuit that is in parallel with the vertical coils 734 rather than being connected in series with the vertical coils.

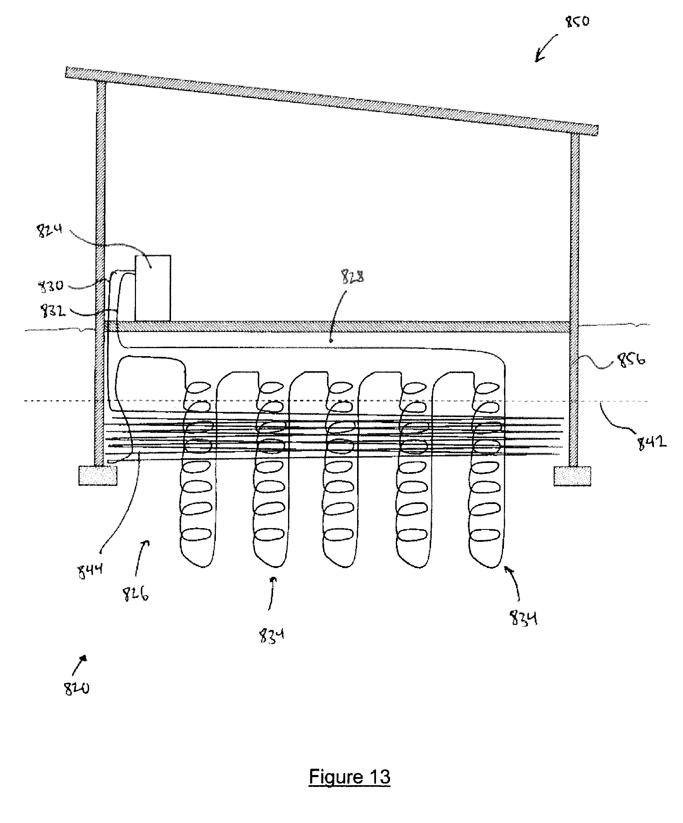

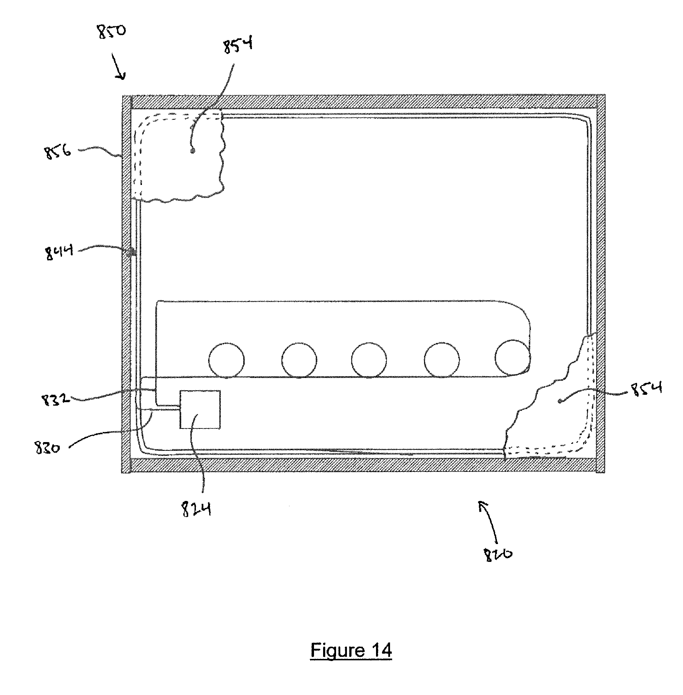

In the embodiment of Figures 11 and 12, the helical winding is wound about the exterior of the foundation walls. Alternatively, the helical winding may be wound within the interior of the foundation walls. For example, Figures 13 and 14 show yet another embodiment of a geothermal heat pump system 820 servicing a building structure 850. Geothermal heat pump system 820 comprises a heat exchange unit 824 and a ground loop 826 in fluid communication with the heat exchange unit 824. The heat exchange unit 824 is located in the building structure 850 and rests on the foundation slab 854, which is a slab on grade. The ground loop 826 receives heat exchange fluid discharged by the heat exchange unit 824 and returns the heat exchange fluid to the heat exchange unit 824 after the heat exchange fluid has circulated through the ground loop 826.

Similar to the previous embodiments, the ground loop 826 is formed of high-density polyethylene tubing. The ground loop 826 is arranged to form a single fluid circuit so that heat exchange fluid fed into the ground loop 826 by the heat exchange unit 824 follows a serial path through the tubing before returning to the heat exchange unit 824. In this embodiment, the ground loop 826 comprises a feed conduit 830 receiving the heat exchange fluid discharged by the heat exchange unit 824, a discharge conduit 832 returning the heat exchange fluid that has circulated through the ground loop 826 back to the heat exchange unit 824, a helical winding 844 coupled to the feed conduit 830 that is buried in the earth 828 and is wound within the interior of foundation walls 856 of the building structure 850, and a plurality of generally equally spaced, vertical coils 834 connected in series and arranged in a row.

The installation of the ground loop 826 can be carried out in one or more stages. For single stage installation, ground loop 826 is installed following the foundation excavation and the construction of the foundation walls 856. In other words, both the vertical coils 834 and the helical winding 844 are installed in the earth 828 prior to backfilling and therefore prior to the laying of the foundation slab 854. Alternatively, for multiple stage installation, the vertical coils 834 are initially inserted into boreholes formed in the earth 828 and the foundation walls 856 are then constructed. Once the foundation walls are built, the helical winding 844 is installed and the volume between foundation walls 856 is backfilled. Those of skill in the art will appreciate that still other alternative installation sequences are possible.

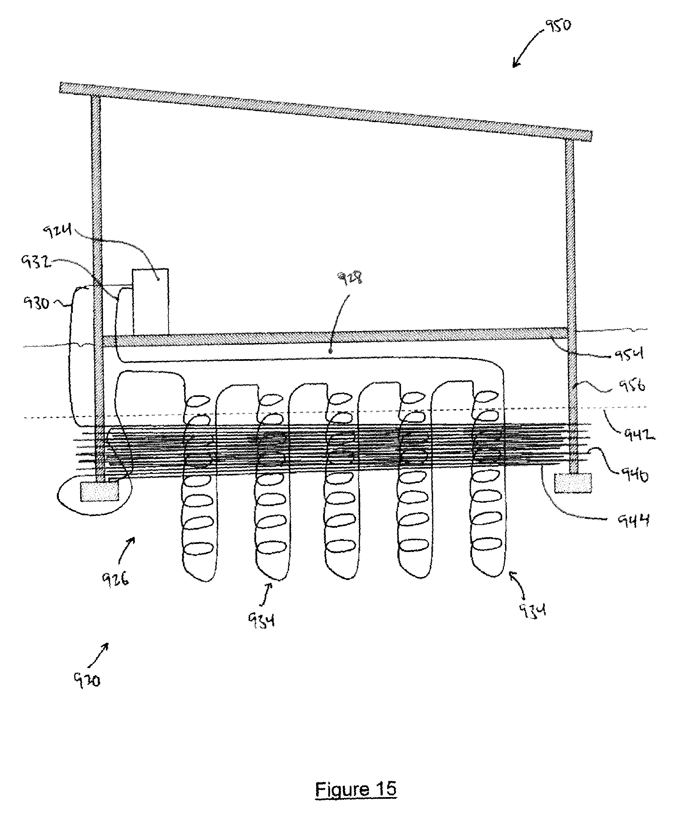

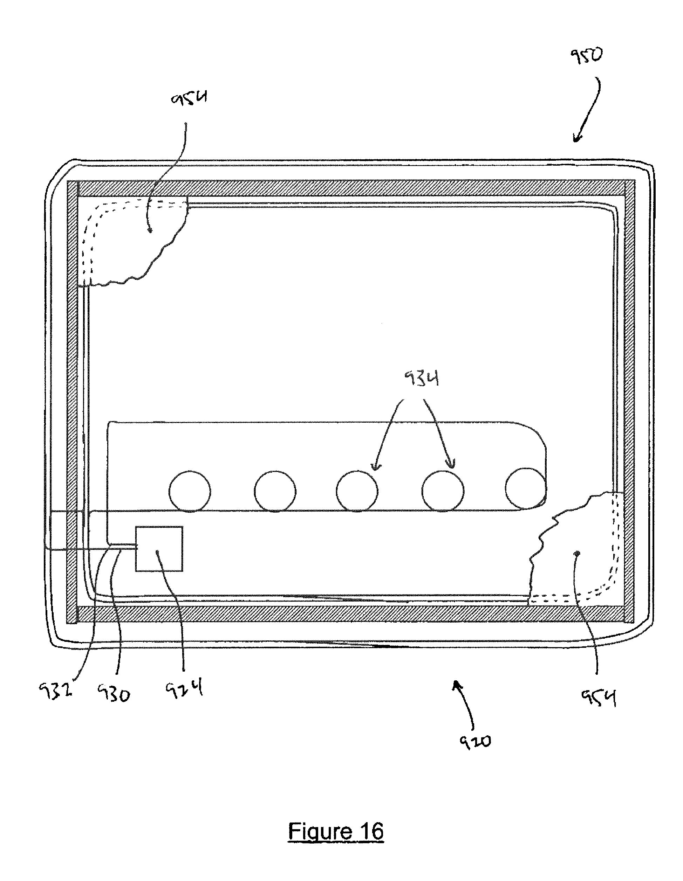

Figures 15 and 16 show still yet another embodiment of a geothermal heat pump system 920 servicing a building structure 950. Geothermal heat pump system 920 comprises a heat exchange unit 924 and a ground loop 926 in fluid communication with the heat exchange unit 924. The heat exchange unit 924 is located in the building structure 950 and rests on the foundation slab 954, which is a slab on grade. The ground loop 926 receives heat exchange fluid discharged by the heat exchange unit 924 and returns the heat exchange fluid to the heat exchange unit 924 after the heat exchange fluid has circulated through the ground loop 926.

Similar to the previous embodiments, the ground loop 926 is formed of high-density polyethylene tubing. The ground loop 926 is arranged to form a single fluid circuit so that heat exchange fluid fed into the ground loop 926 by the heat exchange unit 924 follows a serial path through the tubing before returning to the heat exchange unit 924. In this embodiment, the ground loop 926 comprises a feed conduit 930 receiving the heat exchange fluid discharged by the heat exchange unit 924, a discharge conduit 932 returning the heat exchange fluid that has circulated through the ground loop 926 back to the heat exchange unit 924, a helical winding 940 coupled to the feed conduit 930 that is buried in the earth 928 below the frost line 942 and is wound about the exterior of foundation walls 956 of the building structure 950, a helical winding 944 coupled to the feed conduit 930 that is buried in the earth 928 and is wound within the interior of foundation walls 956 of the building structure 950, and a plurality of generally equally spaced, vertical coils 934 connected in series and arranged in a row.

The installation of the ground loop 926 can be carried out in one or more stages. For single stage installation, ground loop 926 is installed following the foundation excavation and the construction of the foundation walls 956. In other words, the vertical coils 934 and the helical windings 940 and 944 are installed in the earth 928 prior to backfilling and therefore prior to the laying of the foundation slab 954. Alternatively, for multiple stage installation, the vertical coils 934 are initially inserted into boreholes formed in the earth 928 and the helical winding 940 is installed, and the foundation walls 956 are then constructed. Once the foundation walls are built, the interior helical winding 944 is installed. Those of skill in the art will appreciate that still other alternative installation sequences are possible.

The tubing of each fluid circuit may comprise a single, integral length of tubing or alternatively may comprise two or more lengths of interconnected tubing segments.

Although the heat exchange fluid is described above as being a water/ethylene glycol mixture, the heat exchange fluid may be any suitable material or substance. Alternatively, the system may be a direct exchange (DX) heat pump system, in which the ground loop is configured to have refrigerant circulated therethrough.

In the embodiments described above, the vertical coils of each fluid circuit are described and shown as being of generally the same diameter and having the same number of windings. Those of skill in the art will appreciate that the fluid circuits may comprise vertical coils of differing dimensions. Also, the spacing between adjacent vertical coils as well as the number of vertical coils in each fluid circuit may vary.

Although embodiments have been described above with reference to the accompanying drawings, those of skill in the art will appreciate that variations and modifications may be made without departing from the spirit and scope thereof as defined by the appended claims.

## Claims

1. A geothermal heat pump system comprising:
at least one heat exchange unit; and
a ground loop in fluid communication with said at least one heat exchange unit, said ground loop having a feed into which heat exchange fluid is delivered by said at least one heat exchange unit and having a discharge via which circulated heat exchange fluid is returned to said at least one heat exchange unit, said ground loop comprising at least one fluid circuit formed of tubing arranged to define a plurality of laterally spaced, vertical coils buried in earth beneath a foundation slab of a building structure.

2. A heat pump system according to claim 1 wherein said vertical coils are connected in series.

3. A heat pump system according to claim 2 wherein said vertical coils are arranged in at least one row and preferably wherein said vertical coils are generally evenly spaced.

4. A heat pump system according to claim 1 wherein said ground loop comprises a plurality of fluid circuits, each fluid circuit comprising a plurality of laterally spaced, vertical coils connected in series.

5. A heat pump system according to claim 4 wherein the vertical coils of each fluid circuit are arranged in at least one row and preferably wherein the vertical coils of each fluid circuit are generally evenly spaced.

6. A heat pump system according to any one of claims 1 to 5 wherein each of said vertical coils generally has the same diameter.

7. A heat pump system according to any one of claims 1 to 6 wherein each of said vertical coils generally has the same number of windings.

8. A heat pump system according to any one of claims 1 to 7 wherein the ground loop further comprises helical tubing wound about foundation walls of said building structure.

9. A heat pump system according to claim 8 wherein said helical tubing is in series with said vertical coils and preferably wherein said helical tubing is intermediate at least one of said feed and said vertical coils and said vertical coils and discharge.

10. A heat pump system according to any one of claims 1 to 9 wherein the foundation slab is a slab on grade.

11. A heat pump system according to any one of claims 1 to 10 wherein the heat exchange unit comprises a heat pump.

12. A building structure comprising a foundation having foundation walls about a foundation slab and a heat pump system according to any one of claims 1 to 11 to control the climate therein.

13. A method of installing a ground loop of a geothermal heat pump system comprising:
excavating earth to create a foundation excavation;
excavating a plurality of laterally spaced, generally vertical boreholes within the foundation excavation;
inserting a coil of tubing into each borehole, the coils being connected in series;
applying backfill over the coils; and
laying a foundation slab over the backfill.

14. The method of claim 13 further comprising winding a portion of the ground loop about foundation walls, wherein the winding is performed either prior to construction of the foundation walls or following construction of the foundation walls.

15. A method according to claim 13 or 14 wherein the slab is a slab on grade.
